# EUROPEAN PATENT SPECIFICATION

(11) **EP 1 817 884 B1**
(45) Date of publication and mention of the grant of the patent: **17.08.2011**
(21) Application number: 04800423.8
(22) Date of filing: 30.11.2004
(51) Int. Cl.: H04W 36/26

(54) **METHOD FOR SMM CAPABILITY DISTRIBUTION**
VERFAHREN ZUR SMM-FÄHIGKEITSVERTEILUNG
PROCEDE DE DISTRIBUTION DE CAPACITE DE SERVICES MULTIMEDIAS PARTAGES

(43) Date of publication of application: 15.08.2007
(73) Proprietor: Telefonaktiebolaget L- M Ericsson (publ), 164 83 Stockholm (SE)
(72) Inventor: SUNDBERG, Krister, S-191 43 Sollentuna (SE); KLOCKAR, Lars, S-170 66 Solna (SE)
(74) Representative: Hägglund, Mats O.
(86) International application number: PCT/SE2004/001772
(87) International publication number: WO 2006/059928

(56) References cited:
- WO-A1-01/76165
- US-A- 5 982 780
- US-A1- 2002 037 720
- US-A1- 2004 184 439
- US-A1- 2004 248 616
- US-A1- 2005 075 112

## Description

### FIELD OF INVENTION

The present invention relates a method, a terminal , a system and a computer program product for distributing Multimedia Service Capability information of user terminals in mobile radio telecommunication networks.

### BACKGROUND OF THE INVENTION

Multimedia services are foreseen to bring new revenues to the cellular operators running either or both 3G WCDMA and 2.5 G GSM networks. Since plain circuit voice will be an important source of revenue still for many years, the market is developing services 'beyond' voice. These are multimedia applications that for example includes a normal voice call but add another media in parallel to that speech call, so that the two mobile users can both talk and visually share another media at the same time. This shared media may be a still image, a 1-way or 2-way live video, text or game. This type of shared services we herein call Shared Multimedia (SMM) services.

Shared multimedia services requires that a user terminal, e.g. a mobile phone, is capable of running both a standard circuit switched (CS) voice call and a packet switched (PS) IP session at the same time, besides hosting the client that makes up the application logic. Simultaneous CS and PS connection is called Dual Transfer Mode (DTM) in the 3GPP standard ( 3^{rd} Generation Partnership Project). The Dual Transfer Mode is more described in detail in the document 3GPP Technical Specification 43.005 V5.2.0 - Release 5, Radio Access Network; Dual Transfer Mode. US 2004/0184439 discloses a handoves to a cell which provides DTM services.

A highly wanted feature by operators is that mobile users can e.g. visually see from their phone display, which- if any, Shared Multimedia services that are applicable within the ongoing voice call. If the remote user and the calling user both have the capability to use one or several shared multimedia services, one or several icons could be enlightened in the display of both user's mobile phones. This type of capability check is herein called the shared multimedia capability discovery process.

However, the de-facto capability discovery solution discussed currently in standardisation, is oriented around letting the mobile phone initiate a packet switched based mobile capability check towards the remote mobile phone, just after the voice call has been established.

Terminal oriented solution uses packet switched IP session to send a capability query message from the initiating terminal to the other terminal. The packet switched IP session uses radio resources. This means that a query has to be initiated in the beginning of every phone call if one of the two terminals supports SMM. The only provided possibility to send the capability today during an on-going call is to use simultaneously CS and PS connections.

H.323 is an umbrella recommendation from the International Telecommunication Union (ITU) that sets standards for multimedia communications across IP-based networks, e.g. over Local Area Networks (LANs) that do not provide a guaranteed Quality of Service (QoS). According to H.323, a Multipoint Control Unit (MCU) supports conferences between three or more endpoints, and consists of a Multipoint Controller (MC), which is required, and zero or more Multipoint Processors (MP). The MC handles protocol H.245 negotiations between all terminals to determine common capabilities for audio and video processing.

From the U.S. Patent No. 6.161.008 a personal mobility system using a Personal Mobility Domain Name (PMDNS) system is already known. Said system includes a PMDNS database server storing and indicating terminal capability. Said information is used at session request from a terminal. The database server is not situated in a user terminal. Such user profile or terminal capability databases situated in the network are also known from the U.S. Patent No. 6.052.440, U.S. Patent No. 6.640.228, U.S. Patent No. 6.577.718, and the U.S. Patent Application Publication No. US 2003/0065802.

However, there are drawbacks with implementing a solution based on a PS connection in parallel with the CS connection. All timeslots in a cell will not be able to support DTM and therefore a re-reservation might be triggered to enable a DTM connection. The amount of DTM capable timeslots is limited in a cell and the availability of these can therefore be sparse. A high amount of re-reservations can also increase the processor load in the Base Station Controller (BSC).

If all DTM capable mobiles that starts a regular CS call sets up a PS connection there will be a number of unnecessary PS connections. This is because most of the mobiles will only send the capability information over the PS channel and will not use the indicated capability at all.

Thus, one object of the present invention is to provide an invention for Multimedia Capability distribution that avoids unnecessary use of the radio interface and resource.

Yet another object is to provide a solution to the problem to discover if a called User terminal is supporting Shared Multimedia service and if the service is based on other technologies than IP multimedia subsystem (3GPP IMS), for example MMS technology.

Further one object is to provide a terminal not supporting SMM and packet switched connections with the capability to send messages comprising terminal capability information to other terminals and receive messages comprising capability information of other terminals.

### SUMMARY

The above-mentioned objects are achieved by a method, a terminal, a system ,and a computer program product set forth in the characterizing part of the independent claims.

This solution avoids unnecessary use of the packet switched domain and is based on the content of a multimedia capability message to find out about the calling as well as the called user's multimedia capabilities during a set-up of a call before the set-up of a PS connection. If there is a positive capability discovery result out of this for both users, the two user terminals notifies the users e.g. by displaying an icon above a soft button. It can be that the terminal displays a list of common shared multimedia-services.

According to the invented method there will be no need for establishing a packet switched session, which use a lot of radio interface signalling, until the Multimedia Service capability (MMCap) of both subscribers, their user terminals and the cells where they are located, are distributed to the user terminals connected over the circuit switched domain.

In more detail, the invention relates to a method for automatically distributing a message comprising Multimedia Service Capability information of a user terminal in a cellular mobile radio telecommunication system supporting simultaneous circuit switched (CS domain) and package switched (PS domain) connections between user terminals. The method comprises the following step:
- sending the message comprising multimedia capability information from the terminal via the circuit switched domain-comprising the Base Station System (BSS) of the cell that the terminal is currently visiting.

Further, the invention relates to a terminal capable of handling messages comprising Multimedia Service Capability information of a user terminal. It comprises means for sending messages comprising multimedia capability information from the terminal via the circuit switched domain, comprising the Base Station System (BSS) of the cell that the terminal is currently visiting, and means for receiving messages comprising multimedia capability information of another terminal.

The invention also relates to a system for automatically handling and distributing messages comprising Multimedia Service Capability information of user terminals. Said system is included in at least one node of at least one cell in cellular mobile radio telecommunication network, wherein said node comprises the Base Station System (BSS). The system for automatically handling and distributing said messages comprises means for distributing messages comprising multimedia capability information of terminals via the circuit switched domain of a Base Station System (BSS) of the cell that the terminal is currently visiting.

The invention even relates to a computer program product comprising computer executable software stored on a computer readable medium, the software being adapted to run at a computer or other processing means. When said computer executable software is loaded and read by said computer or other processing means, said computer or other processing means is able to perform the steps of the method according to any of claims 1-9.

Preferred embodiments are set forth in the depending claims.

One advantage is that the present invention offers Multimedia Capability discovery that avoids unnecessary use of the packet switched domain and resource.

Further one advantage with the present invention is that the end-user gets clear information whether or not a shared multimedia application can be utilized in a mobile-to-mobile voice call or not.

Yet another advantage is that the invention provide a technique for informing at least two user terminals both if Shared Multimedia service SMM is supported by said user terminals and by the bearers, e.g. the network and the operator of the cells in which said terminals are located for the moment, and the different SMM services that is available for each of said terminals.

Further one advantage is that the invention can be used in a terminal not supporting SMM and packet switched connections.

### BRIEF DESCRIPTION OF THE DRAWINGS

The invention will in the following be described in more detailed with reference to enclosed drawings, wherein:
- **Figure 1**: is a schematic block diagram illustrating the system in which the method for Multimedia Capability Discovery according to the present invention is used.
- **Figure 2**: is block diagram schematically illustrating a preferred embodiment of the especially interesting parts in figure 1.
- **Figure 3**: a signalling scheme illustrating an embodiment of the invented method.
- **Figure 4**: is a block scheme illustrating very schematically a terminal or mobile phone.

### DETAILED DESCRIPTION OF PREFERRED EMBODIMENTS

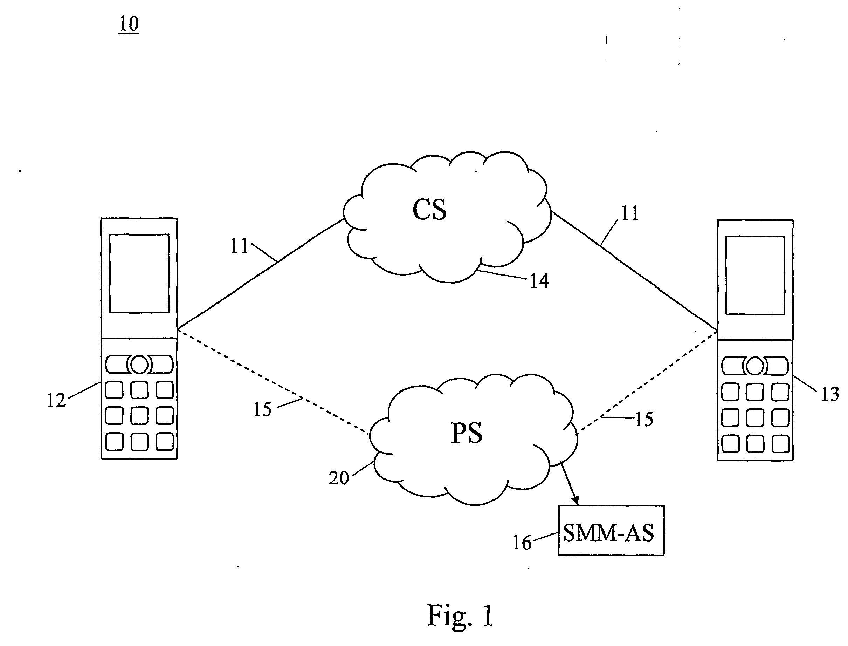

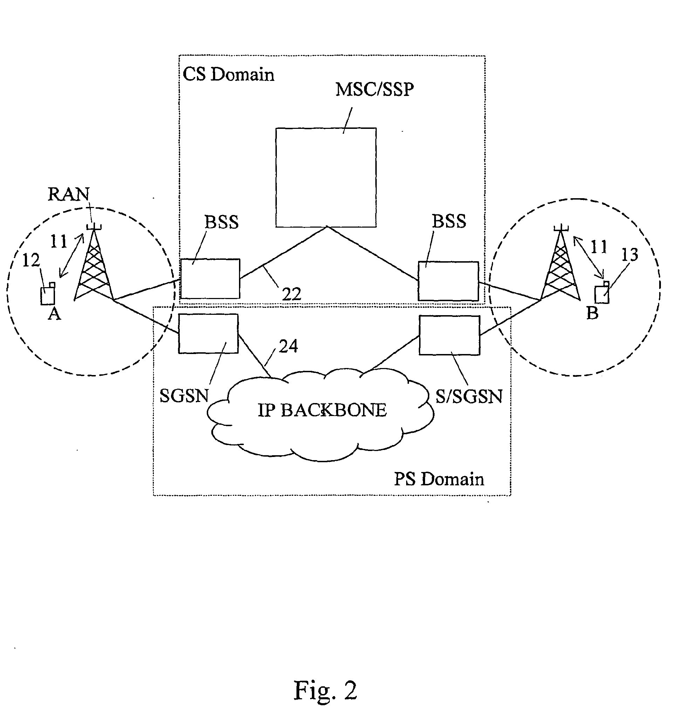

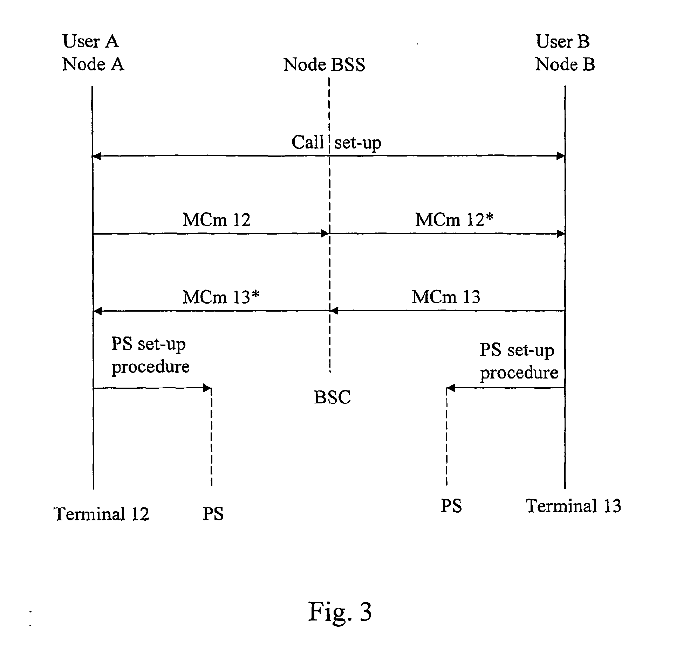

Figure 1 is a schematic block diagram illustrating an embodiment of the system 10 in which the method for Multimedia Capability Discovery according to the present invention is used. Subsystems of the system 10 will be discussed in more detail in connection to the following figures 2 and 3.

For most shared multimedia services it is required that a user terminal, e.g. mobile phone, personal computer (PC), personal assistant (PA), etc, is capable of running both a standard circuit switched voice call and a packet switched session at the same time, besides hosting the client that makes up the application logic. However, some multimedia services, e.g. video calls, may only be using the CS network. A terminal capable of running SMM (Shared multimedia) services requiring that a user terminal is capable of running both a standard circuit switched voice call (via interfaces and connections 11) and a packet switched IP session (over the connections 15) at the same time, besides hosting the client that makes up the application logic for the SMM service, is illustrated in figure 1. A circuit switched network 14 for mobile radio telecommunication based on any standard supporting Shared Multimedia services, e.g. 3G WCDMA and 2.5 G GSM, IM-95, CDMA 2000, includes at least one Shared Multimedia Application server 16.

Two users will not be able to use a SMM service, if not both the user terminals 12, 13 support the SMM service. It is therefore necessary to start an investigation of the calling party's and the called party's SMM capability. The invented system 10 and method imply that at least one of the user terminals is provided with information regarding which Multimedia services that are available for a user or subscriber and the subscriber's user terminal 12, 13. The information, hereafter denoted as Multimedia Capability (information), can be inserted and updated in different ways. Information about a user terminal 12, 13 capability may be inserted by the network operator or the user. Alternatively, the information, i.e. IMEI (International Mobile station Equipment Identity) can be extracted from PDP context activation procedure to a packet switched network 20 and be used for deducing user terminal capability. Another alternative is to use the UAProf (User Agent Profile) information from a packet switched session, at some point in time. The Multimedia Capability could be distributed, transmitted, from the user terminal to other user terminals in Multimedia capability messages, which could be structured in different ways. One structure of Multimedia capability messages, including multimedia capability indicators representing different multimedia capabilities, is described further down of this description (see tables 1 and 2).

The present invention is possible to implement in user terminals that are not capable of running both standard circuit switched voice calls and packet switched IP session simultaneously. The invention makes it possible for such terminals to signal to other user terminals their Multimedia capability or lack of Multimedia capability.

Figures 2 are block diagrams illustrating a system in more detail than figure 1, and in which system the preferred embodiment of the method is used.

The system comprises a mobile radio telecommunication network system which is a part of a Public Land Mobile Network, PLMN. A PLMN comprises at least one Radio Access Network, RAN. Base station and a Mobile Service Switching Centre/Service Switching Point, MSC/SSP node (may be separated in two different nodes), for controlling said RAN. These elements are considered to belong to the CS network, or CS domain. The RAN is also connected to an IP backbone, either via a Serving GPRS Support Node, abbreviated SGSN, or a GGSN node, Gateway GPRS Support Node. These elements are considered to belong to the PS network, PS domain. Each subscriber's user equipment 12, 13 belongs to a certain PLMN, a so called Home-PLMN (HPLMN), in which the subscriber data and authentication data is registered in a Home Location Register database, HLR, of a Home Subscriber Server, HSS. Each subscriber may be in the HPLMN or temporary be visiting another PLMN, a Visited PLMN (VPLMN).

The PLMN system comprises a circuit switched network (home CS), and a packet switched network 14, comprising at least one home packet switched network (home PS) 20.

The PLMN system communicates over an interface 22 with MSC/SSP nodes, with IP backbone system over an interface 24 and with other PLMN systems over an interface (not shown).

The Base Station Controller BSC 26 may be regarded as included in a node, a Base Station System node, comprising a programmable control unit, e.g. server unit, microprocessor, PC, data processing unit, CPU, etc, and further necessary data storages, and I/O units (not shown). The node 26 may therefore be programmed to receive and handle capability messages.

Therefore, in accordance with the invention, a system for automatically handling and distributing messages comprising Multimedia Service Capability information of user terminals is included in at least one node of at least one cell of the cellular mobile radio telecommunication network, wherein said node comprises the Base Station System (BSS). The system for automatically handling and distributing said messages comprises means for distributing messages comprising multimedia capability information (MCm12,MCm13) of terminals (12,13) via the circuit switched domain (14) comprising the Base Station System (BSS) of the cell that the terminal (12, 13) is currently visiting.

According to one embodiment of the invented system, the messages comprising the Multimedia Service Capability information are transferred over control channels of the radio telecommunication network.The control channel of the radio telecommunication network may preferably be a Fast Associated Control channel (FACCH) according to the GSM standard or a corresponding channel of another mobile radio telecommunication standard.

According to one embodiment of the system comprises a Multimedia Service Capability information filter for changing the content of the information, if necessary, before the message is forwarded to the intended terminal.

According to one embodiment, it is possible in the Base Station System BSS, preferably the Base Station Controller BSC, to switch on and off the possibility to send multimedia capability messages/information between user terminals during call set-up. If "sending of multimedia capability information between user terminals" is indicated in the system information broadcasted on the Broadcast Control channel BCCH, all terminals that is compliant with the message will send its capability information to another caller at call set-up.

The capability message shall be semi-transparent for the BSS so that it is possible for BSS to make changes in the message if for instance DTM is not supported.

In the following described embodiments, Intelligent Network IN technology may be used for realizing some of the functions of the invention. IN technology is not the only possible technology when implementing the invention and should therefore not be regarded as a limitation.

Naturally, the different elements of the system have to perform different standard steps and functions for handling the instructions and information signalled in the system discussed in figures 1, 2, 3 and 4. The characteristic steps have to interact with the standard steps and functions of the system, which steps will be discussed and described in the following.

The invented method for automatically distributing a message comprising Multimedia Service Capability information of a user terminal connectable to a cellular mobile radio telecommunication system supporting simultaneous circuit switched (CS domain) and package switched (PS domain) connections between user terminals, will now be discussed in more detail. As mentioned above, the method comprises the step of sending the message comprising multimedia capability information (MCm12) from the terminal (12) via the circuit switched domain of the cell that the terminal (12) is currently visiting. The message may be trigged to be transmitted in different situations of different events.

In one preferred embodiment of the invented method, the step of sending the message comprising multimedia capability information (MCm12) is automatically performed when a voice call is initiated by sending an identity number (E.164 number, IMEI, IMSI, etc) of another user terminal without setting up an Package switched connection, such as a link, or channel.

In another embodiment of the method, the step of sending the message comprising multimedia capability information (MCm12) is automatically performed when the circuit switched connection has been established between the user terminal in node A and another user terminal (13) in a node B without setting up an Package switched connection, such as a link, or channel.

According to further one embodiment of the invention, the step of sending the message comprising multimedia capability information (MCm12) is automatically performed when one of the terminals, connected to each other over a circuit switched connection, is roaming.

In further one embodiment of the invention, the step of sending automatically a message, a respond message, comprising multimedia capability information is performed when receiving from another terminal a message comprising multimedia capability information of said other terminal.

A preferred embodiment of the invented method is in the following described with reference to figure 3, which is a message signalling scheme.

The method starts when a subscriber, calling party A, in node A makes a (voice) call set-up procedure:
- Setting-up a (voice) call.

Said steps are regarded as well-known standard steps in a circuit switched network. As an alternative, the step of setting-up a voice call can be replaced by receiving a voice call answer (indicating that the called party has answered).

The next step performed by the terminal 12 of a calling part A is sending of multimedia capability information, i.e. Multimedia Capability message:
- Sending a multimedia capability message MCm12 from the terminal 12 of node A via the circuit switched connection to the Base Station System (BSS) of the cell that the terminal 12 is currently visiting. The Multimedia Capability message may be pre-stored in an internal memory of the terminal and read, and if necessary modified, at call-initiation by the terminal controlling unit, such as a CPU (central proceesing unit) or similar, or generated by the CPU.

In the calling party's BSS (the BSS which the calling party's terminal is connected to) will following steps be performed:
- Receiving the multimedia capability message MCm12 of A in the Base Station System (BSS), and, if the called terminal 13 is connected to another BSS, forwarding the message to the BSS of the cell where the called and receiving terminal 13 of node B, used by the called party B.

In the terminal of the called party following steps will be performed:
- Receiving via the circuit switched connection and storing the multimedia capability message MCm12 of A in the receiving terminal 13 of node B;
- Automatically responding the received message by generating and sending a multimedia information message MCm13 from terminal 13 of node B via the circuit switched connection to the Base Station System (BSS) of the cell that the terminal 13 of nod B is currently visiting;

In the called party's BSS (the BSS which the called party's terminal 13 is connected to) will following steps be performed:
- Receiving the multimedia capability message MCm13 of B in the Base Station System (BSS), and, if the calling terminal 12 is connected to another BSS, forwarding the message to the BSS of the cell which the calling terminal 12 of node A, used by the calling party A, is currently visiting;

The controlling unit of the terminal of the calling party
- Receiving via the circuit switched connection and storing the multimedia capability message of B.

In each terminal 12, 13 is following steps performed by use of the controlling unit within the terminals :
- Analyzing the received message comprising the Multimedia Service Capabilities of another terminal;
- Alerting the terminal user of the possibility to start a Multimedia service session when the received message has been analyzed.

The step of limiting or completing the number of possible Multimedia Service Capabilities is performed after said step of analyzing the received message has been performed.

The terminals analyzes by comparing the Capabilities of the capability record/list in the received capability message and the own capability record/list to try to match the different capabilities, i.e. SMM services, in MCm12 and MCm13, and prepares a matching multimedia result. This result is than presented, e.g. by displaying the result on the terminals display, for the user of the terminal.

If the called terminal is not capable of reading the Multimedia Capability message, the mobile telecommunication network or the terminal will discard it.

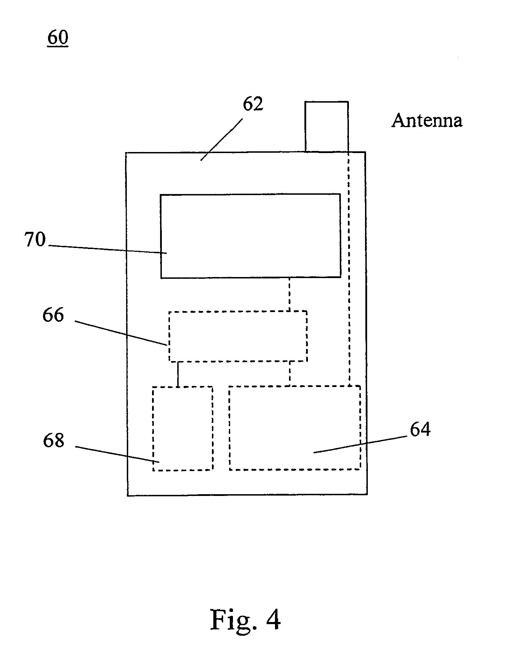

Figure 4 is a block scheme illustrating very schematically a User terminal 60, here illustrated as and denoted a terminal or a mobile phone. This terminal 60 comprises a housing 62 within which a radio unit for signalling, and transmitting and receiving voice calls and data information over the air interface to a mobile radio telecommunication network. The radio unit 64 is connected to and controlled by a control unit 66, which is a computer or processing means (not shown), e.g. a CPU (Central Processing Unit), micro-processor, PC (Personal Computer) etc. For most shared multimedia services it is required that a user terminal, e.g. mobile phone, is capable of running both a standard circuit switched voice call and a packet switched session at the same time, besides hosting the client that makes up the application logic. However, some multimedia services, e.g. video calls, may only be using the CS network. Therefore, a memory storage means 68 is connected to the control unit 66 for storing data and software code to software program for controlling the control unit and the terminal. The illustrated memory storage means 68 represents many different kinds of storages like ROM, RAM, EPROM, etc, usually used in terminals on the market. In said memory storage means 68 is loaded and stored User Agents for different services like WAP Push messages, MMS, Multimedia Capability, SIP messages, etc. User agents software programs that is automatically alerted when the control unit identifies a corresponding incoming service. The terminal 60 is also provided with a Man-Machine-Interface, MMI, a display 70 connected to and controlled by the control unit for showing different information. The display 70 may be able to show soft button that when touch can activate a software application stored in said memory storage means 68. The different unit of the terminal 60 is powered by at least one battery (not shown).

According to the present invention, the terminals are provided with means for sending a Multimedia Capability message (and if necessary, even means for generating a multimedia capability message), means for sending automatically a respond message comprising multimedia capability information, means for analyzing a received message means for alerting the terminal user of the possibility to start a Multimedia service session is implemented by means of a computer or processing means , e.g. a CPU (Central Processing Unit), micro-processor, PC (Personal Computer) etc, and connected data storage memories for storing data and software program code to be executed by said computer or data processing device. Said means are preferably implemented as software program code to be executed by said computer or data processing device.

Regular transceiver circuit, or separate transmitter and receiver circuits, may be selected by a person skilled in the art as user terminal means for transmitting and receiving messages, e.g. over a control channel of a radio telecommunication network.

If a User Agent is provided in a user terminal, said agent may be used to conduct the following registration steps and the enlightening of the SMM Icon, if the capability response is received:
1. Enlighten the SMM icon or corresponding SMM indicator.
2. PDP (Packet Data Protocol) Context Activation.
3. Start SIP registration.
   - In case of a MMS based Shared Multimedia, this step will not be automatically activated.

When the user sees the SMM-list icon or equivalent, the user may press for example a soft button underneath an SMM-icon, to send an image e.g. in JPEG format, towards the remote user of the ongoing voice call.

Although both terminals have matching multimedia capability, one of the terminals, or both, may be roaming in a network that is not provided with the special kind of radio bearer needed for that kind of service.

For alerting the user of the terminal, means for generating a characteristic sound, or vibrations, etc, may be used instead of an icon.

In the described embodiment above, the E.164 number have been used as an subscriber identity, but other subscriber or terminal related information, such as IMEI, IMSI, may be used as well as identity for a subscriber.

The method may be implemented by means of a computer program comprising the software code means for performing the steps of the method. A computer program product comprising said computer executable software stored on a computer readable/usable medium, the software being adapted to run at a computer or other processing means. When said computer executable software is loaded and read by said computer or other processing means, said computer or other processing means is able to perform the steps of the method according to any of claims 1-9.

In the description, different kind of Computer or processing means are listed, e.g. CPU (Central Processing Unit), micro-processor, PC (Personal Computer), server unit, etc. Said list is not exhaustive and should therefore not be regarded as a limitation for the scope of the protection.

A Multimedia capability message may involve contents of different type. A multimedia capability message contains Information element which may be:
1) a Call Control Protocol discriminator which is a protocol discriminator earlier defined and described in the document 3GPP Technical Specification 24.008 V5.7.0 - Release 5, Mobile radio interface layer 3 specifications; Core network protocols; stage 3 (This document is hereafter denoted as [2]);
2) a Transaction identifier, which is described in [2] also;
3) a Multimedia Capability message type, which will be described hereafter;
4) a Multimedia Capability indicator, which also will be described hereafter.

In table 1, the head of a package head defining possible message types for Call Control and call related Suplementary Service (SS) messages is disclosed.

**Table 1.**

| | | | | | | | | |
|---|---|---|---|---|---|---|---|---|
| | | | | | . | | | |
| | | | | | . | | | |
| | | | | | . | | | |
| x | x | 1 | 1 | - | - | - | - | Miscellaneous messages: |
| | | | | 1 | 0 | 0 | 1 | - CONGESTION CONTROL |
| | | | | 1 | 1 | 1 | 0 | - NOTIFY |
| | | | | 1 | 1 | 0 | 1 | - STATUS |
| | | | | 0 | 1 | 0 | 0 | - STATUS ENQUIRY |
| | | | | 0 | 1 | 0 | 1 | - START DTMF |
| | | | | 0 | 0 | 0 | 1 | - STOP DTMF |
| | | | | 0 | 0 | 1 | 0 | - STOP DTMF ACKNOWLEDGE |
| | | | | 0 | 1 | 1 | 1 | - START DTMF ACKNOWLEDGE |
| | | | | 0 | 1 | 1 | 1 | - START DTMF REJECT |
| | | | | 1 | 0 | 1 | 0 | - FACILITY |
| | | | | 1 | 0 | 0 | 0 | - MULTIMEDIA CAPABILITY |

The four last positions of the package data head define the type of the present message. "1000" indicates that the message type is a Multimedia Message. In table 2, the body of a message package defining possible Multimedia capability indicator information element is disclosed.

**Table 2.**

| | | | | | | | |
|---|---|---|---|---|---|---|---|
| Notification description (octet 1) | | | | | | | |
| Bits | | | | | | | |
| **7** | **6** | **5** | **4** | **3** | **2** | **1** | |
| 0 | 0 | 0 | 0 | 0 | 0 | 1 | Pictures is supported |
| 0 | 0 | 0 | 0 | 0 | 1 | 0 | Video telephony over CS 64 kbit/s |
| 0 | 0 | 0 | 0 | 1 | 0 | 0 | Positioning supported |
| 0 | 0 | 0 | 1 | 0 | 0 | 0 | Video over PS is supported |
| (This is examples of what this indicator can be used for) | | | | | | | |

The multimedia capability indicator is a type 3 layer information element having the bit length of one octet. Each multimedia service may be coded according to the indicators in table 2. Said indicators will be possible to handle by computers or processing means in the BSS,.BSC or user terminal.

A Capability message may comprise a number of said indicators, depending on how many different multimedia services a user terminal is capable of supporting. If a user terminal is not adapted for multimedia handling, the Multimedia Capability message transmitted by said terminal will not include any indicator.

The present invention is not limited to the above-described preferred embodiments. Various alternatives, modifications and equivalents may be used. Therefore, the above embodiments should not be taken as limiting the scope of the invention, which is defined by the appending claims.

## Claims

1. A method for automatically distributing a message comprising Multimedia Service Capability information of a user terminal in a cellular mobile radio telecommunication system supporting simultaneous circuit switched, CS domain and package switched, PS domain connections between user terminals, the method is **characterized in that** it comprises the following step of:
- sending the message comprising multimedia capability information (MCm12) from the terminal (12) via the circuit switched domain of the cell that the terminal (12) is currently visiting.

2. The method according to claim 1, **characterized in that** the step of sending the message comprising multimedia capability information (MCm12) is automatically performed when a voice call is initiated by sending an identity number preferably (E.164 number, IMEI, IMSI, etc) of another user terminal without setting up an Package switched connection, such as a link, or channel.

3. The method according to claim 1, **characterized in that** the step of sending the message comprising multimedia capability information (MCm12) is automatically performed when the circuit switched connection has been established between the user terminal in node A and another user terminal (13) without setting up an Package switched connection, such as a link, or channel.

4. A method according to any of claims 1-3, **characterized in that** the step of sending the message comprising multimedia capability information (MCm12) is automatically performed when one of the terminals connected to each other over a circuit switched connection is roaming.

5. A method according to any of claims 1-4, **characterized in that** the method comprises a step of sending automatically a respond message comprising multimedia capability information when receiving from another terminal a message comprising multimedia capability information of said other terminal.

6. A method according to any of the preceding claims, **characterized in that** the method comprises the steps of:
- Analyzing the received message comprising the Multimedia Service Capability information of another terminal;
- Alerting the terminal user of the possible Multimedia services when the received message has been analyzed.

7. A method according to any of the preceding claims, **characterized by** the step of transmitting and receiving said message comprising the Multimedia Service Capability information over a control channel of the radio telecommunication network.

8. A method according to claim 7, **characterized in that** control channel of the radio telecommunication network is a Fast Associated Control channel (FACCH) according to the GSM standard or a corresponding channel of another mobile radio telecommunication standard.

9. A method according to any of the preceding claims, **characterized by** the step of limiting or completing the number of possible Multimedia Service Capabilities.

10. A terminal capable of handling messages comprising Multimedia Service Capability information of a user terminal, **characterized in that** it comprises means for sending messages comprising multimedia capability information (MCm12) from the terminal (12) via the circuit switched domain, comprising the Base Station System (BSS) of the cell that the terminal (12) is currently visiting, and means for receiving messages comprising multimedia capability information of another terminal.

11. The terminal according to claim 10, **characterized by** means for sending automatically the message comprising multimedia capability information (MCm12) when a voice call is initiated by sending the number of another user terminal.

12. The terminal according to claim 10, **characterized by** means for sending automatically the message comprising multimedia capability information (MCm12) when the circuit switched connection has been established between the terminal in node A and another user terminal (13).

13. A terminal according to any of claims 10-12, **characterized by** means for sending automatically the message comprising multimedia capability information (MCm12) when the terminal is roaming.

14. A terminal according to any of claims 10-13, **characterized by** means for sending automatically a respond message comprising multimedia capability information (MCm13) when receiving from another terminal a message comprising multimedia capability information (MCm12) of said other terminal.

15. A terminal according to any of the preceding terminal claims, **characterized in that** the terminal also comprises means for analyzing a received message comprising the Multimedia Service Capability information of another terminal and means for alerting the terminal user of the possible Multimedia services when the received message has been analyzed.

16. A terminal according to any of the preceding terminal claims, **characterized in that** the terminal comprises means for transmitting and receiving over a control channel of a radio telecommunication network the message comprising the Multimedia Service Capability information.

17. A terminal according to any of the preceding terminal claims, **characterized in that** control channel of the radio telecommunication network is a Fast Associated Control channel (FACCH) according to the GSM standard or a corresponding channel of another mobile radio telecommunication standard.

18. A system for automatically handling and distributing messages comprising Multimedia Service Capability information of user terminals, said system being included in at least one node of at least one cell in cellular mobile radio telecommunication network, wherein said node comprises a Base Station System (BSS), **characterized in that** the system for automatically handling and distributing said messages comprises means for distributing messages comprising multimedia capability information (MCm12,MCm13) of terminals (12) via a circuit switched domain (14) comprising a Base Station System (BSS) of the cell that the terminal (12) is currently visiting.

19. The system according to claim 18, **characterized in that** the messages comprising the Multimedia Service Capability information are transferred over control channels of the radio telecommunication network.

20. The system according to claim 19, **characterized in that** the control channel of the radio telecommunication network is a Fast Associated Control channel (FACCH) according to the GSM standard or a corresponding channel of another mobile radio telecommunication standard.

21. A system according to any of claims 18-20, **characterized in that** the system comprises a Multimedia Service Capability information filter for changing the content of the information if necessary before the message is forwarded to the intended terminal.

22. A computer program product comprising computer executable software stored on a computer readable medium, the software being adapted to run at a computer or other processing means **characterized in that** when said computer executable software is loaded and read by said computer or other processing means, said computer or other processing means is able to perform the steps of the method according to any of claims 1-9.

## Patentansprüche

1. Verfahren zum automatischen Verteilen einer Nachricht, die Multimediadienstfähigkeitsinformation eines Teilnehmerendgeräts umfasst, in einem zellularen Mobilfunk-Telekommunikationssystem, das gleichzeitige leitungsvermittelte, CS-Bereichs- und paketvermittelte, PS-Bereichsverbindungen zwischen Teilnehmerendgeräten unterstützt, wobei das Verfahren **dadurch gekennzeichnet ist, dass** es den folgenden Schritt umfasst:
- Senden der Nachricht, die Multimediafähigkeitsinformation (MCm12) umfasst, vom Endgerät (12) über den leitungsvermittelten Bereich der Zelle, die das Endgerät (12) gerade besucht.

2. Verfahren nach Anspruch 1, **dadurch gekennzeichnet, dass** der Schritt des Sendens der Nachricht, die Multimediafähigkeitsinformation (MCm12) umfasst, automatisch durchgeführt wird, wenn eine Gesprächsverbindung durch Senden einer Kennungsnummer vorzugsweise (E.164-Nummer, IMEI, IMSI usw.) eines anderen Teilnehmerendgeräts eingeleitet wird, ohne eine paketvermittelte Verbindung wie etwa eine Übertragungsstrecke oder einen Kanal aufzubauen.

3. Verfahren nach Anspruch 1, **dadurch gekennzeichnet, dass** der Schritt des Sendens der Nachricht, die Multimediafähigkeitsinformation (MCm12) umfasst, automatisch durchgeführt wird, wenn die leitungsvermittelte Verbindung zwischen dem Endgerät im Knoten A und einem anderen Endgerät (13) eingerichtet worden ist, ohne eine paketvermittelte Verbindung wie etwa eine Übertragungsstrecke oder einen Kanal aufzubauen.

4. Verfahren nach einem der Ansprüche 1 bis 3, **dadurch gekennzeichnet, dass** der Schritt des Sendens der Nachricht, die Multimediafähigkeitsinformation (MCm12) umfasst, automatisch durchgeführt wird, wenn eines der Endgeräte, die über eine leitungsvermittelte Verbindung miteinander verbunden sind, einen Rufbereichswechsel durchführt.

5. Verfahren nach einem der Ansprüche 1 bis 4, **dadurch gekennzeichnet, dass** das Verfahren einen Schritt umfasst: automatisches Senden einer Antwortnachricht, die Multimediafähigkeitsinformation umfasst, wenn von einem anderen Endgerät eine Nachricht empfangen wird, die Multimediafähigkeitsinformation des anderen Endgeräts umfasst.

6. Verfahren nach einem der vorhergehenden Ansprüche, **dadurch gekennzeichnet, dass** das Verfahren die Schritte umfasst:
- Analysieren der empfangenen Nachricht, welche die Multimediadienstfähigkeitsinformation eines anderen Endgeräts umfasst;
- Hinweisen des Endgerätnutzers auf die möglichen Multimediadienste, wenn die empfangene Nachricht analysiert worden ist.

7. Verfahren nach einem der vorhergehenden Ansprüche, **gekennzeichnet durch** den Schritt: Senden und Empfangen der Nachricht, welche die Multimediadienstfähigkeitsinformation umfasst, über einen Steuerkanal des Funktelekommunikationsnetzwerks.

8. Verfahren nach Anspruch 7, **dadurch gekennzeichnet, dass** der Steuerkanal des Funktelekommunikationsnetzwerks ein schneller zugeordneter Steuerkanal (FACCH) nach dem GSM-Standard oder ein entsprechender Kanal eines anderen Mobilfunk-Telekommunikationsstandards ist.

9. Verfahren nach einem der vorhergehenden Ansprüche, **gekennzeichnet durch** den Schritt: Begrenzen oder Vervollständigen der Anzahl der möglichen Multimediadienstfähigkeiten.

10. Endgerät, fähig zum Verarbeiten von Nachrichten, die Multimediadienstfähigkeitsinformation eines Teilnehmerendgeräts umfassen, **dadurch gekennzeichnet, dass** es umfasst: Mittel zum Senden von Nachrichten, die Multimediafähigkeitsinformation (MCm12) umfassen, vom Endgerät (12) über den leitungsvermittelten Bereich, der das Basisstationssystem (BSS) der Zelle umfasst, die das Endgerät (12) gerade besucht, und Mittel zum Empfangen von Nachrichten, die Multimediafähigkeitsinformation eines anderen Endgeräts umfassen.

11. Endgerät nach Anspruch 10, **gekennzeichnet durch** Mittel zum automatischen Senden der Nachricht, die Multimediafähigkeitsinformation (MCm12) umfasst, wenn eine Gesprächsverbindung **durch** Senden der Nummer eines anderen Teilnehmerendgeräts eingeleitet wird.

12. Endgerät nach Anspruch 10, **gekennzeichnet durch** Mittel zum automatischen Senden der Nachricht, die Multimediafähigkeitsinformation (MCm12) umfasst, wenn die leitungsvermittelte Verbindung zwischen dem Endgerät im Knoten A und einem anderen Endgerät (13) eingerichtet worden ist.

13. Endgerät nach einem der Ansprüche 10 bis 12, **gekennzeichnet durch** Mittel zum automatischen Senden der Nachricht, die Multimediafähigkeitsinformation (MCm12) umfasst, wenn das Endgerät einen Rufbereichswechsel durchführt.

14. Endgerät nach einem der Ansprüche 10 bis 13, **gekennzeichnet durch** Mittel zum automatischen Senden einer Antwortnachricht, die Multimediafähigkeitsinformation (MCm13) umfasst, wenn von einem anderen Endgerät eine Nachricht empfangen wird, die Multimediafähigkeitsinformation (MCm12) des anderen Endgeräts umfasst.

15. Endgerät nach einem der vorhergehenden endgerätbezogenen Ansprüche, **dadurch gekennzeichnet, dass** das Endgerät außerdem umfasst: Mittel zum Analysieren einer empfangenen Nachricht, welche die Multimediadienstfähigkeitsinformation eines anderen Endgeräts umfasst, und Mittel zum Hinweisen des Endgerätnutzers auf die möglichen Multimediadienste, wenn die empfangene Nachricht analysiert worden ist.

16. Endgerät nach einem der vorhergehenden endgerätbezogenen Ansprüche, **dadurch gekennzeichnet, dass** das Endgerät umfasst: Mittel zum Senden und Empfangen der Nachricht, welche die Multimediadienstfähigkeitsinformation umfasst, über einen Steuerkanal eines Funktelekommunikationsnetzwerks.

17. Endgerät nach einem der vorhergehenden endgerätbezogenen Ansprüche, **dadurch gekennzeichnet, dass** der Steuerkanal des Funktelekommunikationsnetzwerks ein schneller zugeordneter Steuerkanal (FACCH) nach dem GSM-Standard oder ein entsprechender Kanal eines anderen Mobilfunk-Telekommunikationsstandards ist.

18. System zum automatischen Verarbeiten und Verteilen von Nachrichten, die Multimediadienstfähigkeitsinformation von Teilnehmerendgeräten umfassen, wobei das System in mindestens einen Knoten mindestens einer Zelle in einem zellularen Mobilfunk-Telekommunikationssystem eingeschlossen ist, wobei der Knoten ein Basisstationssystem (BSS) umfasst, **dadurch gekennzeichnet, dass** das System zum automatischen Verarbeiten und Verteilen der Nachrichten umfasst: Mittel zum automatischen Verteilen von Nachrichten, die Multimediafähigkeitsinformation (MCm12, MCm13) von Endgeräten (12) umfassen, über einen leitungsvermittelten Bereich (14), der ein Basisstationssystem (BSS) der Zelle umfasst, die das Endgerät (12) gerade besucht.

19. System nach Anspruch 18, **dadurch gekennzeichnet, dass** die Nachrichten, welche die Multimediadienstfähigkeitsinformation umfassen, über Steuerkanäle des Funktelekommunikationsnetzwerks übermittelt werden.

20. System nach Anspruch 19, **dadurch gekennzeichnet, dass** der Steuerkanal des Funktelekommunikationsnetzwerks ein schneller zugeordneter Steuerkanal (FACCH) nach dem GSM-Standard oder ein entsprechender Kanal eines anderen Mobilfunk-Telekommunikationsstandards ist.

21. System nach einem der Ansprüche 18 bis 20, **dadurch gekennzeichnet, dass** das System einen Multimediadienstfähigkeitsinformationsfilter umfasst, um bei Bedarf den Inhalt der Information zu ändern, bevor die Nachricht zum vorgesehenen Endgerät weitergeleitet wird.

22. Computerprogrammprodukt, umfassend computerausführbare Software, die auf einem computerlesbaren Medium gespeichert ist, wobei die Software dafür eingerichtet ist, auf einem Computer oder anderen Verarbeitungsmitteln zu laufen, **dadurch gekennzeichnet, dass**, wenn die computerausführbare Software durch den Computer oder die anderen Verarbeitungsmittel geladen und gelesen wird, der Computer oder die anderen Verarbeitungsmittel fähig sind, die Schritte des Verfahrens nach einem der Ansprüche 1 bis 9 durchzuführen.

## Revendications

1. Procédé destiné à distribuer automatiquement un message comprenant des informations de capacités de service multimédia d'un terminal utilisateur dans un système de télécommunication radio mobile cellulaire prenant en charge des connexions simultanées de domaine à commutation de circuits, CS, et de domaine à commutation de paquets, PS, entre des terminaux utilisateur, le procédé étant **caractérisé en ce qu'**il comprend l'étape ci-dessous consistant à :
- envoyer le message comprenant les informations de capacité multimédia (MCm12) à partir du terminal (12) via le domaine à commutation de circuits de la cellule que le terminal (12) visite à cet instant.

2. Procédé selon la revendication 1, **caractérisé en ce que** l'étape consistant à envoyer le message comportant les informations de capacité multimédia (MCm12) est automatiquement mise en oeuvre lorsqu'un appel vocal est initié par l'envoi d'un numéro d'identité de préférence (un numéro E.164, IMEI, IMSI, etc.) d'un autre terminal utilisateur, sans établir une connexion à commutation de paquets, comme par exemple une liaison, ou un canal.

3. Procédé selon la revendication 1, **caractérisé en ce que** l'étape consistant à envoyer le message comportant les informations de capacité multimédia (MCm12) est automatiquement mise en oeuvre lorsque la connexion à commutation de circuits a été établie entre le terminal utilisateur dans le noeud A et un autre terminal utilisateur (13), sans établir une connexion à commutation de paquets, comme par exemple une liaison, ou un canal.

4. Procédé selon une quelconque des revendications 1 à 3, **caractérisé en ce que** l'étape consistant à envoyer le message comportant les informations de capacité multimédia (MCm12) est automatiquement mise en oeuvre lorsque l'un des terminaux mutuellement connectés sur une connexion à commutation de circuits est en itinérance.

5. Procédé selon une quelconque des revendications 1 à 4, **caractérisé en ce que** le procédé comprend une étape consistant à envoyer automatiquement un message de réponse comprenant les informations de capacité multimédia lors de la réception, par un autre terminal, d'un message comprenant les informations de capacité multimédia dudit autre terminal.

6. Procédé selon l'une quelconque des revendications précédentes, **caractérisé en ce que** le procédé comprend les étapes ci-dessous consistant à :
- analyser le message reçu comportant les informations de capacités de service multimédia d'un autre terminal ;
- indiquer à l'utilisateur de terminal les services multimédias possibles lorsque le message reçu a été analysé.

7. Procédé selon l'une quelconque des revendications précédentes, **caractérisé par** l'étape consistant à transmettre et recevoir ledit message comprenant les informations de capacités de service multimédia sur un canal de commande du réseau de télécommunication radio.

8. Procédé selon la revendication 7, **caractérisé en ce que** le canal de commande du réseau de télécommunication radio est un canal de commande associé rapide (FACCH) selon la norme GSM ou un canal correspondant d'une autre norme de télécommunication radio mobile.

9. Procédé selon l'une quelconque des revendications précédentes, **caractérisé par** l'étape consistant à limiter ou à compléter le nombre de capacités de service multimédia possibles.

10. Terminal apte à traiter des messages comprenant des informations de capacités de service multimédia d'un terminal utilisateur, **caractérisé en ce qu'**il comporte un moyen pour envoyer des messages comprenant les informations de capacité multimédia (MCm12) à partir du terminal (12), via le domaine à commutation de circuits, comprenant le système de station de base (BSS) de la cellule que le terminal (12) visite à cet instant, et un moyen pour recevoir des messages comprenant des informations de capacité multimédia d'un autre terminal.

11. Terminal selon la revendication 10, **caractérisé par** un moyen pour envoyer automatiquement le message comprenant les informations de capacité multimédia (MCm12) lorsqu'un appel vocal est initié par l'envoi du numéro d'un autre terminal utilisateur.

12. Terminal selon la revendication 10, **caractérisé par** un moyen pour envoyer automatiquement le message comprenant les informations de capacité multimédia (MCm12) lorsque la connexion à commutation de circuits a été établie entre le terminal dans le noeud A et un autre terminal utilisateur (13).

13. Terminal selon l'une quelconque des revendications 10 à 12, **caractérisé par** un moyen pour envoyer automatiquement le message comprenant les informations de capacité multimédia (MCm12) lorsque le terminal est en itinérance.

14. Terminal selon l'une quelconque des revendications 10 à 13, **caractérisé par** un moyen pour envoyer automatiquement le message comprenant les informations de capacité multimédia (MCm13) lors de la réception, à partir d'un autre terminal, d'un message comprenant les informations de capacité multimédia (MCm12) dudit autre terminal.

15. Terminal selon l'une quelconque des revendications précédentes connexes au terminal, **caractérisé en ce que** le terminal comprend en outre un moyen pour analyser un message reçu comportant les informations de capacités de service multimédia d'un autre terminal, et un moyen pour indiquer à l'utilisateur de terminal les services multimédias possibles lorsque le message reçu a été analysé.

16. Terminal selon l'une quelconque des revendications précédentes connexes au terminal, **caractérisé en ce que** le terminal comporte un moyen pour transmettre et recevoir sur un canal de commande d'un réseau de télécommunication radio le message comportant les informations de capacités de service multimédia.

17. Terminal selon l'une quelconque des revendications précédentes connexes au terminal, **caractérisé en ce que** le canal de commande du réseau de télécommunication radio est un canal de commande associé rapide (FACCH) selon la norme GSM ou un canal correspondant d'une autre norme de télécommunication radio mobile.

18. Système destiné à traiter et à distribuer automatiquement des messages comprenant des informations de capacités de service multimédia de terminaux utilisateur, ledit système étant inclus dans au moins un noeud d'au moins une cellule dans le réseau de télécommunication radio mobile cellulaire, dans lequel ledit noeud comprend un système de station de base (BSS), **caractérisé en ce que** le système destiné à traiter et à distribuer automatiquement lesdits messages comprend un moyen pour distribuer des messages comprenant des informations de capacité multimédia (MCm12, MCm13) de terminaux (12) via un domaine à commutation de circuits (14) comprenant un système de station de base (BSS) de la cellule que le terminal (12) visite à cet instant.

19. Système selon la revendication 18, **caractérisé en ce que** les messages comportant les informations de capacités de service multimédia sont transférés sur des canaux de commande du réseau de télécommunication radio.

20. Système selon la revendication 19, **caractérisé en ce que** le canal de commande du réseau de télécommunication radio est un canal de commande associé rapide (FACCH) selon la norme GSM ou un canal correspondant d'une autre norme de télécommunication radio mobile.

21. Système selon l'une quelconque des revendications 18 à 20, **caractérisé en ce que** le système comprend un filtre d'informations de capacités de service multimédia pour changer le contenu des informations, si nécessaire, avant l'acheminement du message au terminal prévu.

22. Produit-programme informatique comprenant un logiciel exécutable par un ordinateur, stocké sur un support lisible par un ordinateur, le logiciel étant apte à être exécuté sur un ordinateur ou un autre moyen de traitement, **caractérisé en ce que**, lorsque ledit logiciel exécutable par un ordinateur est chargé et lu par ledit ordinateur ou ledit autre moyen de traitement, ledit ordinateur ou ledit autre moyen de traitement est apte à mettre en oeuvre les étapes du procédé selon l'une quelconque des revendications 1 à 9.
